# EUROPEAN PATENT APPLICATION

(11) **EP 4 446 354 A1**
(43) Date of publication of application: **16.10.2024**
(21) Application number: 23167256.9
(22) Date of filing: 11.04.2023
(51) Int. Cl.: C08G 18/28, C08G 18/32, C08G 18/48, C08G 18/66, C08G 18/76, C09D 175/08

(54) **THERMOPLASTIC POLYURETHANE BASED COATING COMPOSITION**

(71) Applicant: BASF SE, 67056 Ludwigshafen am Rhein (DE)
(72) Inventor: BOKEL, Felicia, Wyandotte, Michigan 48192 (US); RAHMAN, Md Arifur, Wyandotte, Michigan 48192 (US); WAGAN, Perla, Tarrytown, New York 10591 (US); HUGEL, Elizabeth, Grosse Ile, Michigan 48138 (US)
(74) Representative: Altmann Stößel Dick Patentanwälte PartG mbB

(57) **Abstract**

The presently claimed invention relates to a method for coating inner surface of a substrate with at least one thermoplastic polyurethane coating composition. The presently claimed invention also relates a coated substrate having inner surface coated with at least one thermoplastic polyurethane coating composition comprising a polyurethane and at least one wax. The present invention also relates to use of at least one thermoplastic polyurethane coating composition for coating inner surface of a substrate, wherein the thermoplastic polyurethane coating composition comprising a polyurethane and at least one wax. The thermoplastic polyurethane coating composition comprises a polyurethane and at least one wax. The method restricts the amounts of organic impurities such as oligomeric cyclic ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro), leaching out from the coated surfaces of the substrates, when such coated surfaces of the substrate comes in contact with water.

## Description

### FIELD OF THE INVENTION

The presently claimed invention relates to a method for coating inner surface of a substrate with at least one thermoplastic polyurethane coating composition. The presently claimed invention further relates to a coated substrate having inner surface coated with at least one thermoplastic polyurethane coating composition. The presently claimed invention further relates to use of at least one thermoplastic polyurethane coating composition for coating inner surface of a substrate.

### BACKGROUND OF THE INVENTION

Polyurethanes or PU is a general term for polymers obtained by reaction of isocyanates or polyisocyanates with polyols. Types of polyurethanes include rigid, semi-rigid and flexible foams; thermoplastic polyurethane; and other miscellaneous types, employable as coatings, adhesives, and sealants.

Polyurethanes find use in a wide variety of different fields. For different applications, polyurethanes are tailored in terms of their properties, such that they afford optimal properties in terms of processing or application. For example, polyurethanes are used for coatings of substrates, including for the coating of pipelines. In particular, polyurethanes are used to apply an impermeable lining to the inner surfaces of pipelines. This helps in preventing corrosion of the inner surface of the pipeline and salt deposition over it after its prolonged use.

Use of polyurethane as coatings for surfaces of substrates is known in the state of the art and described, for instance, in the following references.

U.S. Patent No. 6,730,353 describes a coating suitable for drinking water pipelines. The two-part coating system comprises a first part comprising one or more aliphatic polyisocyanates, and a second part comprising one or more aromatic polyamines, such that the two parts, when mixed and applied to the internal surfaces of pipelines, form a rapid setting impervious coating suitable for contact with drinking water.

EP0936235 describes a coating which comprises a liquid epoxide resin, an aliphatic polyisocyante and a difunctional amine in combination to produce a high-performance rapid setting lining system.

Polyurethanes, in general, comprise of different organic impurities, such as oligomeric cyclic ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro). These organic impurities are lower molecular weight oligomeric cyclic ethers which can vaporize slowly at elevated temperatures, and which may also tend to leach out in water and common organic liquids that come into contact with the polyurethanes. The leaching of organic impurities adversely affects the quality of the water or common organic liquids. Additionally, the presence of organic impurities in polyurethane also results in weight loss and undesirable dimensional changes in the polyurethane product. Accordingly, various governments have stipulated regulations for the minimum amounts of such organic impurities present in potable water. Specifically, the permissible limit for oligomeric cyclic ethers in potable water in some jurisdictions is below 100 µg/L. The permissible limit for 2,4,7,9-Tetramethyldec-5-yn-4,7-diol (TMDD) in potable water is below 20 µg/L.

Therefore, it is important that coatings comprising polyurethane do not release such organic impurities in water when such coatings come in direct contact with water or common organic solvents. The concentrations of impurities exceeding the permissible limits, directly or indirectly affect the level of protection of human health or alter the odour or flavour of water.

One such group of related organic impurities is oligomeric cyclic ethers. The polyurethane produced from polytetrahydrofuran (poly-THF) can contain as much as 7-15%, by weight, of oligomeric cyclic ether by-products. The presence of oligomeric cyclic ethers in polymers or oligomers is undesirable for several reasons. First, the ethers are non-functional impurities and can represent an economic penalty to a purchaser of such polymers or oligomers because up to 7.0-15.0% by weight of the material purchased contains no reactive hydroxyl groups and may therefore be useless for the purposes intended. Secondly, when these oligomers are used in preparing polyurethanes, the presence of the oligomeric cyclic ethers by-products tends to degrade the polyurethane's properties.

Therefore, there is a need to provide a method for coating the inner surface of a substrate, which when said substrate comes in direct contact with water or organic liquids, it does not release organic impurities, particularly oligomeric cyclic ethers beyond permissible limits, or at least the amount of any release is decreased.

Accordingly, it is an object of the presently claimed invention to provide a method for coating inner surface of a substrate with a thermoplastic polyurethane coating composition. It is another object of the invention to provide a coated substrate having inner surface coated with a thermoplastic polyurethane coating composition. Further, it is desired that the amounts of impurities leaching out of the coated substrate are reduced to a low level, preferably to rates that ensure water or organic liquids in contact with the substrate remain within the permissible limits.

### SUMMARY OF THE INVENTION

It was surprisingly found that the method of the presently claimed invention for coating inner surface of a substrate with the thermoplastic polyurethane coating composition comprising a polyurethane and at least one wax provides a product having desired characteristics.

Further, it was also found that the method of the presently claimed invention for coating of inner surface of a substrate with thermoplastic polyurethane coating composition prevents leaching of organic impurities such as oligomeric cyclic ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro) in water.

An aspect of the presently claimed invention relates to a method for coating inner surface of a substrate with at least one thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is selected from linear or branched, substituted or unsubstituted, C₂-C₂₀ alkyl group, substituted or unsubstituted, C₂-C₂₀ aryl group linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group,
   m is an integer from 2 to 8, and
   n is an integer from 2 to 5;
b) at least one polyisocyanate of general formula B

   R²(NCO)ₚ (B)

   wherein R² is selected from linear or branched, substituted or unsubstituted C₂-C₂₀ alkyl group, substituted or unsubstituted, C₂-C₂₀ aryl group linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, and p is an integer from 2 to 4;
c) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
   with a proviso that R¹ is not -(CH₂)₄-.

Another aspect of the presently claimed invention relates to a coated substrate having inner surface coated with at least one thermoplastic polyurethane coating composition comprising a polyurethane and at least one wax.

Still another aspect of the presently claimed invention relates to use of at least one thermoplastic polyurethane coating composition for coating inner surface of a substrate.

Yet another aspect of the presently claimed invention relates to a thermoplastic polyurethane coating composition comprising a polyurethane and at least one wax.

Yet another aspect of the presently claimed invention relates to a method of forming a thermoplastic polyurethane coating composition.

### DETAILED DESCRIPTION OF THE INVENTION

Before the present compositions and formulations of the presently claimed invention are described, it is to be understood that this invention is not limited to particular compositions and formulations described, since such compositions and formulations may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well i.e., a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure, or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment but may refer to so.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

The oligomeric cyclic ethers being non-functional impurities, there presence in polyurethanes beyond optimum levels can represent an economic penalty to a purchaser. Further, the presence of the oligomeric cyclic ether impurities in polyurethanes tends to degrade the polyurethane's properties. Furthermore, leaching of oligomeric cyclic ethers in water affect the quality of water or common organic solvents adversely. Therefore, polyurethanes having higher amounts of organic impurities such as oligomeric cyclic ethers may not be suitable as pipe liners.

There is indeed a need to provide a method for coating the inner surface of a substrate, such that when said coated inner surface comes in direct contact with water or organic liquids, the substrate does not release organic impurities, particularly oligomeric cyclic ethers beyond permissible limits.

The objective is achieved by a method for coating inner surface of a substrate with at least one thermoplastic polyurethane coating composition comprising a polyurethane and at least one wax. The method restricts the amounts of organic impurities such as oligomeric cyclic ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro), leaching out from the coated surfaces of the substrates, when such coated surfaces of the substrate comes in contact with water.

The objective is particularly achieved by a method for coating inner surface of a substrate with at least one thermoplastic polyurethane coating composition comprising a polyurethane and at least one wax. In particular, the polyurethane is obtainable by a process comprising reacting at least one polyether polyol, at least one polyisocyanate, and at least one diol, wherein the polyether polyol is not-(CH₂)₄-.

An aspect of the presently claimed invention is directed to a method for coating inner surface of a substrate with at least one thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is selected from linear or branched, substituted or
   unsubstituted, C₂-C₂₀ alkyl group, linear or branched, substituted or
   unsubstituted C₇-C₂₀ arylalkyl group, linear or branched, substituted or
   unsubstituted C₂-C₂₀ alkylene group, linear or branched, substituted or
   unsubstituted C₃-C₂₀ cycloalkyl group,
   m is an integer from 2 to 8, and
   n is an integer from 2 to 5;
b) at least one polyisocyanate of general formula B

   R²(NCO)ₚ (B)

   wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, and
   p is an integer from 2 to 4;
c) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a preferred embodiment, the presently claimed invention is directed to a method for coating inner surface of a substrate with at least one thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is linear or branched, substituted or unsubstituted, C₂-C₂₀ alkyl group,
   m is an integer from 2 to 8, and
   n is an integer from 2 to 5;
b) at least one polyisocyanate of general formula B

   R²(NCO)ₚ (B)

   wherein R² is substituted or unsubstituted C₇-C₂₀ arylalkyl group, and
   p is an integer from 2 to 4;
c) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a more preferred embodiment, the presently claimed invention is directed to a method for coating inner surface of a substrate with at least one thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is linear or branched, substituted or unsubstituted, C₂-C₆ alkyl group,
   m is an integer from 2 to 8, and
   n is an integer from 2 to 5;
b) at least one polyisocyanate of general formula B

   R²(NCO)ₚ (B)

   wherein R² is substituted or unsubstituted C₁₀-C₁₅ arylalkyl group, and
   p is an integer from 2 to 4;
c) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

The term "alkyl" herein refers to an acyclic saturated aliphatic group including linear or branched alkyl saturated hydrocarbon radical denoted by a general formula CₚH₂ₚ₊₁ and wherein p denotes the number of carbon atoms such as 1, 2, 3 etc.

In one embodiment, alkyl refers to a substituted or unsubstituted, linear or branched, C₂-C₂₀ alkyl group. The C₂-C₂₀ alkyl is selected from ethyl, propyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosanyl. In a preferred embodiment, it is selected from ethyl, propyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosanyl.

The term "alkenyl" refers to an unsubstituted, linear acyclic unsaturated aliphatic group including a linear alkenyl unsaturated hydrocarbon radical denoted by a general formula CₚH₂ₚ₋₁ and wherein p denotes the number of carbon atoms such as 1, 2, 3, 4 etc.

In one embodiment, alkenyl refers to a substituted or unsubstituted linear C₂-C₂₀ alkenyl selected from 1-propenyl, 1-butenyl, 1-pentenyl, 1-hexenyl, 2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl, 1-octadecenyl, 2-octadecenyl, 1-nonadecenyl, 2-nonadecenyl, 1-eicosenyl, and 2-eicosenyl.

The term "cycloalkyl" refers to a substituted or unsubstituted or branched C₃-C₂₀ cycloalkyl having a monocyclic or bicyclic 3 to 10 membered saturated cycloaliphatic radical. The C₃-C₂₀ cycloalkyl is a monocyclic or bicyclic C₃-C₂₀ compound. In a preferred embodiment, it is cyclopropyl, cyclobutyl, cyclopentyl, cyclohexyl, cycloheptyl, bicyclo[2.2.1] heptyl and bicyclo[3.1.1]heptyl. The C₃-C₂₀ monocyclic and bicyclic cycloalkyl can be further branched with one or more equal or different alkyl groups, as described hereinabove.

The term "aryl" refers to a monocyclic, bicyclic or tricyclic hydrocarbon ring system having preferably 6 to 20 carbon atoms, wherein at least one carbocyclic ring is having a 4p+2π-electron system, wherein 'p' is the number of aromatic rings. An aryl moiety may be unsubstituted, monosubstituted or identically or differently polysubstituted. In a preferred embodiment, it is phenyl, 1-naphthyl, 2-naphthyl or anthracenyl.

The term "arylalkyl" refers to a monocyclic, bicyclic or tricyclic hydrocarbon ring system having preferably 6 to 20 carbon atoms, wherein at least one carbocyclic ring is having a 4p+2π-electron system, wherein 'p' is the number of aromatic rings, wherein the aryl moiety is monosubstituted or identically or differently polysubstituted.

"Oligomeric cyclic ethers" are molecules that consists of a few repeating ether units. In the context of the present invention, oligomeric cyclic ethers particularly refer to cyclic ethers having 'butyl' (-(CH₂)₄-) repeating units. These molecules can be named based on the number of butyl repeating units, such as OCE3, OCE4, OCE5 and so on. The structures for OCE3, OCE4, OCE5 have been provided herein below.

| Compound | Chemical Structure |
|---|---|
| OCE3 | 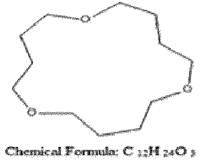 |
| OCE4 | 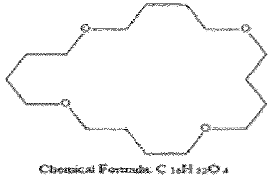 |
| OCE5 | 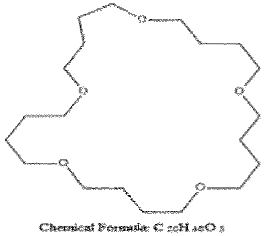 |

In a preferred embodiment, the at least one polyether polyol is selected from polyethylene glycol, polypropylene glycol, polyisobutylene glycol, or a mixtures thereof.

In a more preferred embodiment, the at least one polyether polyol is selected from polyethylene glycol, polypropylene glycol, or a mixtures thereof.

In even more preferred embodiment, the at least one polyether polyol is polyethylene glycol.

The polyether polyols according to the presently claimed invention are preferably obtainable by known methods such as by addition reaction of alkylene oxides with glycol as an initiator molecule.

In a preferred embodiment, the polyether polyol has the average functionality of 1.0 to 5.0 and a OH value of 10 mg KOH/g to 1000 mg KOH/g.

In a more preferred embodiment, the polyether polyol has the average functionality of 1.0 to 4.0 and a OH value of 10 mg KOH/g to 500 mg KOH/g.

In even more preferred embodiment, the nominal functionality of the first polyether polyol is from 1.0 to 5.0, or from 1.0 to 4.7, or from 1.5 to 4.5, or from 1.6 to 4.2, or from 1.6 to 4.1. More preferably, it is from to 1.7 to 4.5, or from to 1.7 to 4.5, or from to 1.8 to 4.5, or from to 1.9 to 4.5, or from to 2.0 to 4.5.

In even more preferred embodiment, the OH value of the polyether polyol is from to 50 mg KOH/g to 500 mg KOH/g. More preferably, it is from to 50 mg KOH/g to 480 mg KOH/g, or from to 50 mg KOH/g to 470 mg KOH/g, or from to 60 mg KOH/g to 470 mg KOH/g, or from to 60 mg KOH/g to 460 mg KOH/g, or from to 65 mg KOH/g to 460 mg KOH/g. More preferably, it is from to 65 mg KOH/g to 450 mg KOH/g, or from to 70 mg KOH/g to 450 mg KOH/g. In this context, according to the invention, the OH number is determined according to DIN 53240 and the functionality of the polyols applied is to be understood as theoretical functionality. For polyether polyols this theoretical functionality for example, can be obtained by calculating the functionality based on the functionality of the starting molecules. Effects of side reactions during the preparation of the polyether polyols, such as disproportionation, are not considered when determining the functionality.

The polyisocyanates can be aromatic polyisocynates, aliphatic polyisocyanates or a mixture thereof.

In the context of the presently claimed invention, the aromatic polyisocyanates refers to aryl polyisocyanates or linear or branched, substituted or unsubstituted arylalkyl polyisocyanates. Similarly, the aliphatic polyisocyanates refers to linear or branched, substituted or unsubstituted alkyl polyisocyanates, or linear or branched, or substituted or unsubstituted cycloalkyl polyisocyanates.

In a preferred embodiment, the at least one polyisocyanate is selected from hexamethylene-1,6-diisocyanate, 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2-xylylene diisocyanate, 1,3- xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1,3-diisocyanate, 1,2-cyclohexane diisocyanate, 1,3-cyclohexane diisocyanate, 1,4-cyclohexane diisocyanate, 2,4-methylcyclohexane diisocyanate, 2,6-methylcyclohexane diisocyanate, 2,4'-dicyclohexyldiisocyanate, bis(isocyanatomethyl)-cyclohexane diisocyanate, isophorone diisocyanate or a mixture thereof.

In the context of the presently claimed invention, the term 'at least one polyisocyanate' refers to either monomeric polyisocyanate, polymeric polyisocyanate or mixtures thereof.

The alkyl polyisocyanate is selected from hexamethylene-1,6-diisocyanate, 2,2,4-trimethylhexamethylene diisocyanate, tetramethylene 1,4-diisocyanate, pentamethylene 1,5-diisocyanate, decamethylene diisocyanate, 1,12-dodecane diisocyanate, and 2-methyl-1,5-pentamethylene diisocyanate or mixtures thereof.

The cycloalkyl polyisocyanate is selected from 4,4'-dicychohexylemethane diisocyanate, cyclobutane-1, 3-diisocyanate, 1,2-cyclohexane diisocyanate, 1,3-cyclohexane diisocyanate, 1,4-cyclohexane diisocyanate, 2,4-methylcyclohexane diisocyanate, 2,6-methylcyclohexane diisocyanate, bis(isocyanatomethyl)-cyclohexane diisocyanate, 2,4'-dicyclohexyldiisocyanates, or bis(isocyanatomethyl)-cyclohexane diisocyanate or mixtures thereof.

The arylalkyl polyisocyanate is selected from 2,2-diphenylmethane diisocyanate, 4,4-diphenylmethane diisocyanate, 2,4-tolylene diisocyanate, 2,6-tolylene diisocyanate, triphenyl methane-4,4',4"-triisocyanate, 1,2-xylylene diisocyanate, 1,3-xylylene diisocyanate, 1,4-xylylene diisocyanate, m-tetramethylxylyene diisocyanate (TMXDI) or mixtures thereof.

The aryl polyisocyanate is selected from 1,2-phenylene diisocyanate, 1,3-phenylene diisocyanate, 1,4-phenylene diisocyanate, naphthylene-1,5-diisocyanate, polyphenyl polymethylene polyisocyanate, or mixtures thereof.

In even more preferred embodiment, the at least one polyisocyanate is selected from methylene diphenyl diisocyanate, polymeric methylene diphenyl diisocyanate or a mixture thereof.

Commercially, methylene diphenyl diisocyanate is available as a mixture of three different isomeric forms, namely 2,2'-methylene diphenyl diisocyanate (2,2'-MDI), 2,4'-methylene diphenyl diisocyanate (2,4'-MDI) and 4,4'-methylene diphenyl diisocyanate (4,4'-MDI).

In a preferred embodiment, the isomeric ratio as well as amounts of oligomeric species vary in wide ranges in commercial products. Preferably, polymeric methylene diphenyl diisocyanate typically contains 30.0 wt% to 80.0 wt% of monomeric methylene diphenyl diisocyanate isomers, the balance being said oligomeric species. Preferably, the methylene diphenyl diisocyanate isomers are a mixture of 4,4'-methylene diphenyl diisocyanate, 2,4'-methylene diphenyl diisocyanate and very low levels of 2,2'-methylene di-phenyl diisocyanate.

In a preferred embodiment, the at least one polyisocyanate has an NCO content in the range from 2.0% to 33.5% by weight based on the total weight of the polyisocyanate.

In preferred embodiment, the at least one polyisocynate has an isocyanate functionality of 2.0 or greater. Preferably, the isocyanate component has an isocyanate functionality in the range of from 2.0 to 4.0. More preferably, the isocyanate component has an isocyanate functionality in the range of from 2.0 to 3.5. Even more preferably, the isocyanate component has an isocyanate functionality in the range of from 2.0 to 3.0.

In a preferred embodiment, the at least one diol of general formula (C) is selected from ethylene glycol, diethylene glycol, propane-1,3-diol, butane-1,4-diol, hexane-1,6-diol, cyclohexane-1,4-dimethanol or a mixture thereof.

In a more preferred embodiment, the at least one diol of general formula (C) is butane-1,4-diol.

In a preferred embodiment, the amount of the at least one diol is 5.0 wt% to 15.0 wt% based on total weight of the polyurethane, more preferably 7.0 wt% to 14.0 wt%, and even more preferably 8.0 wt% to 13.0 wt%.

In a preferred embodiment, the thermoplastic polyurethane coating composition further comprises at least one hydrophobing agent of general formula

R⁴-OH,

wherein, R⁴ is selected from C₆-C₂₀ alkyl group, more preferably C₆-C₁₈, and even more preferably C₈-C₁₈.

Hydrophobing agents are known to modify the surfaces so that it becomes less wettable or water repellent.

In a preferred embodiment, the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol or 1-eicosanol.

In a more preferred embodiment, the at least one at least one hydrophobing agent is 1-octanol.

In a more preferred embodiment, the at least one hydrophobing agent is 1-octadecanol.

In a preferred embodiment, the at least one hydrophobing agent is present in the thermoplastic polyurethane composition in an amount of 0.05 wt% to 2.5 wt% based on the total weight of the polyurethane coating composition, more preferably 0.5 wt% to 2.5 wt%, and even more preferably 1.0 wt% to 2.5 wt%.

In a preferred embodiment, the at least one wax is selected from montanic acid ester, ethylene bis stearamide, fatty acid ester, fatty acid amides or a mixture thereof.

In a more preferred embodiment, the at least one wax is montanic acid ester.

In a preferred embodiment, the at least one wax is present in the thermoplastic polyurethane composition in an amount of 0.1 wt% to 5 wt% based on the total weight of the polyurethane coating composition, more preferably 0.5 wt% to 2.5 wt%, and even more preferably 0.5 wt% to 1.5 wt %.

### Thermoplastic polyurethane coating composition

The thermoplastic polyurethane coating composition of the presently claimed invention have acceptable properties, particularly tensile strength, melt flow rate, shore hardness and elongation at break. The optimal properties of thermoplastic polyurethane coating composition employed in the method of the presently claimed invention for coating the inner surface of a substrate allow design of coating systems thereby satisfying the key requirements as per the need.

In a preferred embodiment, the shore A hardness of the at least one thermoplastic polyurethane coating composition is in the range from 75.0 to 100.0 determined according to DIN ISO 7619, and more preferably 85.0 to 95.0.

In a preferred embodiment, the elongation at break of the at least one thermoplastic polyurethane coating composition is in the range from 500 to 800 determined according to ASTM D412 or DIN 53504-S2, and more preferably 500 to 680.

In a preferred embodiment, the tensile strength of the at least one thermoplastic polyurethane coating composition is in the range from 30.0 to 60.0 MPa determined according to ASTM D412 or DIN 53504-S2, and more preferably 30.0 to 40.0 MPa.

In a preferred embodiment, the melt flow resistance of the at least one thermoplastic polyurethane coating composition is in the range from 50.0 to 100.0 g/10 min determined according to ASTM D1238 or DIN EN ISO 1133, and more preferably 60.0 to 80.0 g/10 min.

In a preferred embodiment, the abrasion index of the at least one thermoplastic polyurethane coating composition is in the range from 5.0 to 60.0 mm³ determined according to DIN ISO 4649, and more preferably 20.0 to 40.0 mm³.

In a preferred embodiment, the at least one thermoplastic polyurethane coating composition passes migration test method BS EN 12873-2:2005 for the content of cyclic oligomeric ethers.

In a preferred embodiment, the at least one thermoplastic polyurethane coating composition passes migration test according to method BS EN 12873-2:2005 for the content of 2,4,7,9-Tetramethyl-5-decyne-4,7-diol (TMDD).

In a preferred embodiment, the at least one thermoplastic polyurethane coating composition passes migration test according to method BS EN 12873-2:2005 for the content of 7,9-Di-tert-butyl-1-oxaspiro(4,5)deca-6,9-diene-2,8-dione (oxaspiro).

In a preferred embodiment, the substrate is a hollow substrate.

Hollow substrate is a shaped article being hollow inside. Such substates are characterized to have at least an inner surface and outer surface. These substrates can be used for storing or transporting gaseous, liquid or solid materials. The inner surface of such substrates tends to come in direct contact filled gaseous, liquid or solid materials, when used for transportation or storage.

In a preferred embodiment, the substrate is selected from pipeline, containers, containment vessels or tanks.

In even more preferred embodiment, the substrate is a pipeline for transport of drinking water.

The thickness of the coating of the at least one thermoplastic polyurethane coating composition coated on the inner surface of the pipeline for transport of drinking water is in the range of 0.1 to 10.0 mm.

In another preferred embodiment, the substrate is a container having inner surface coated with the thermoplastic polyurethane coating composition and the at least one coated inner surface is in direct contact with water.

### Additive

The thermoplastic polyurethane coating composition as used in the method of the presently claimed invention further comprises at least one additive. The at least one additive is selected from blowing agents, dyes, pigments, stabilizers, plasticizers, antistats, fungistats, bacteriostats, curing agents, or antioxidants. The additives used herein are known and used in the polyurethane compositions.

### Coated substrate

Another aspect of the presently claimed invention is directed to a coated substrate having inner surface coated with at least one thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is selected from linear or branched, substituted or unsubstituted C₂-C₂₀ alkyl group, substituted or unsubstituted C₆-C₂₀ aryl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
   m is an integer selected from 2 to 8, and
   n is an integer selected from 2 to 5;
b) at least one polyisocyanate of general formula B

   R²(NCO)ₚ (B)

   wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
   p is an integer selected from 2 to 4;
a) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a preferred embodiment, the presently claimed invention is directed to a coated substrate having inner surface coated with at least one thermoplastic polyurethane coating composition comprising a polyurethane and at least one wax, wherein the polyurethane is obtainable by a process comprising reacting
c) at least one polyether polyol of general formula A,

   H(OR¹)ₘ(OH)ₙ, (A)

   wherein R¹ is selected from linear or branched, substituted or unsubstituted C₂-C₂₀ alkyl group,
   m is an integer selected from 2 to 8, and
   n is an integer selected from 2 to 5;
d) at least one polyisocyanate of general formula B

   R²(NCO)ₚ (B)

   wherein R² is substituted or unsubstituted C₇-C₂₀ arylalkyl group; and
   p is an integer selected from 2 to 4;
b) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a more preferred embodiment, the presently claimed invention is directed to a coated substrate having inner surface coated with at least one thermoplastic polyurethane coating composition comprising a polyurethane and at least one wax, wherein the polyurethane is obtainable by a process comprising reacting
e) at least one polyether polyol of general formula A,

   H(OR¹)ₘ(OH)ₙ, (A)

   wherein R¹ is selected from linear or branched, substituted or unsubstituted C₂-C₆ alkyl group,
   m is an integer selected from 2 to 8, and
   n is an integer selected from 2 to 5;
f) at least one polyisocyanate of general formula B

   R²(NCO)ₚ (B)

   wherein R² is substituted or unsubstituted C₁₀-C₁₅ arylalkyl group; and
   p is an integer selected from 2 to 4;
c) at least one diol of general formula C

   R³(OH)₂ (C)

   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a preferred embodiment, the at least one polyether polyol is selected from polyethylene glycol, polypropylene glycol, polyisobutylene glycol, or mixtures thereof.

In a preferred embodiment, the at least one polyisocyanate is selected from hexamethylene-1,6-diisocyanate, 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2-xylylene diisocyanates, 1,3-xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1, 3-diisocyanate, 1,2-cyclohexane diisocyanate, 1,3-cyclohexane diisocyanates, 1,4-cyclohexane diisocyanate, 2,4-methylcyclohexane diisocyanate, 2,6-methylcyclohexane diisocyanate, 2,4'-dicyclohexyldiisocyanate, bis(isocyanatomethyl)-cyclohexane diisocyanate, isophorone diisocyanate or a mixture thereof.

In a preferred embodiment, the at least one polyisocyanate has an NCO content in the range from 2.0 wt% to 33.5 wt% based on the total weight of the polyisocyanate.

In a preferred embodiment, at least one diol of general formula (C) is selected from ethylene glycol, propane-1,3-diol, butane-1,4-diol, hexane-1,6-diol, cyclohexane-1,4-dimethanol or a mixture thereof.

In a preferred embodiment, the amount of the at least one diol is 5.0 wt% to 10.0 wt% based on total weight of the polyurethane, more preferably 7.0 wt% to 14.0 wt%, and even more preferably 8.0 wt% to 13.0 wt%.

In a preferred embodiment, the coating composition further comprises at least one hydrophobing agent of Formula R⁴-OH, wherein R⁴ is selected from C₆-C₂₀ alkyl group, and more preferably C₆-C₁₈, and even more preferably C₈-C₁₈.

In a preferred embodiment, the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol or 1-eicosanol.

In a more preferred embodiment, the at least one hydrophobing agent is 1-octadecanol.

In a preferred embodiment, the at least one hydrophobing agent is present in the thermoplastic polyurethane composition in an amount of 0.05 wt% to 2.5 wt% based on the total weight of the polyurethane coating composition, and more preferably 0.5 wt% to 2.5 wt%, and even more preferably 1.0 wt% to 2.5 wt%.

In a preferred embodiment, the at least one wax is selected from montanic acid ester, ethylene bis stearamide, fatty acid ester, fatty acid amides or mixtures thereof.

In a preferred embodiment, the shore A hardness of the at least one thermoplastic polyurethane coating composition is in the range from 75.0 to 100.0 according to DIN ISO 7619, and more preferably 85.0 to 95.0.

In a preferred embodiment, the elongation at break of the at least one thermoplastic polyurethane coating composition is in the range from 500 to 800 determined according to ASTM D412 or DIN 53504-S2, and more preferably 500 to 680.

In a preferred embodiment, the tensile strength of the at least one thermoplastic polyurethane coating composition is in the range from 30.0 to 60.0 MPa according to ASTM D412 or DIN 53504-S2, and more preferably 30.0 to 40.0 MPa.

In a preferred embodiment, the melt flow resistance of the at least one thermoplastic polyurethane coating composition is in the range from 50.0 to 100.0 g/10 min determined according to ASTM D1238 or DIN EN ISO 1133, and more preferably 60.0 to 80.0 g/10 min.

In a preferred embodiment, the abrasion index of the at least one thermoplastic polyurethane coating composition is in the range from 5.0 to 60.0 mm³ determined according to DIN ISO 4649, and more preferably 20.0 to 40.0 mm³.

In a preferred embodiment, the at least one thermoplastic polyurethane coating composition passes migration test method BS EN 12873-2:2005 for the content of cyclic oligomeric ethers.

In a preferred embodiment, the at least one thermoplastic polyurethane coating composition passes migration test according to method BS EN 12873-2:2005 for the content of 2,4,7,9-Tetramethyl-5-decyne-4,7-diol (TMDD).

In a preferred embodiment, the at least one thermoplastic polyurethane coating composition passes migration test according to method BS EN 12873-2:2005 for the content of 7,9-Di-tert-butyl-1-oxaspiro(4,5)deca-6,9-diene-2,8-dione (oxaspiro).

In a preferred embodiment, the substrate is a hollow substrate.

In a preferred embodiment, the substrate is selected from pipeline, containers, containment vessels or tanks.

In a preferred embodiment, the substrate is a pipeline for transport of drinking water.

In a preferred embodiment, the thickness of the coating of the at least one thermoplastic polyurethane coating composition coated on the inner surface of the pipeline for transport of drinking water is in the range of 0.1 to 10.0 mm.

In a preferred embodiment, wherein the substrate is a container having inner surface coated with the thermoplastic polyurethane coating composition and the at least one coated inner surface is in direct contact with water.

In still another aspect of the presently claimed invention, there is provided use of at least one thermoplastic polyurethane coating composition for coating inner surface of a substrate, wherein the thermoplastic polyurethane coating composition comprising a polyurethane and at least one wax, wherein the polyurethane is obtainable by process comprising reacting
a) at least one polyether polyol of general formula A,

   H(OR¹)ₘ(OH)ₙ, (A)

   wherein R¹ is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
   m is an integer selected from 2 to 8, and
   n is an integer selected from 2 to 5;
b) at least one polyisocyanate of general formula B

   R²(NCO)ₚ (B)

   wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
   p is an integer selected from 2 to 4;
   c) at least one diol of general formula C

      R³(OH)₂ (C)
   wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

In a preferred embodiment, the substrate is a hollow substrate selected from pipeline, containers, containment vessels or tanks.

In a preferred embodiment, the substrate is a pipeline for transport of drinking water.

In a preferred embodiment, the thickness of the coating of the at least one thermoplastic polyurethane coating composition coated on the inner surface of the pipeline for transport of drinking water is in the range of 0.1 to 10.0 mm.

In a preferred embodiment, the at least one thermoplastic polyurethane coating composition passes migration test method BS EN 12873-2:2005 for the content of cyclic oligomeric ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro).

In yet another aspect of the presently claimed invention, there is provided a thermoplastic polyurethane coating composition comprising a polyurethane and at least one wax, wherein the polyurethane is obtainable by a process comprising reacting
a) at least one polyether polyol of general formula A,

   H(OR¹)ₘ(OH)ₙ, (A)

   wherein R¹ is selected from linear or branched, substituted or unsubstituted C₂-C₂₀ alkyl group, substituted or unsubstituted C₆-C₂₀ aryl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
   m is an integer selected from 2 to 8, and
   n is an integer selected from 2 to 5;
b) at least one polyisocyanate of general formula B

   R²(NCO)ₚ (B)

   wherein R² is selected from linear or branched, substituted or unsubstituted C₂-C₂₀ alkyl group, substituted or unsubstituted C₆-C₂₀ aryl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
   p is an integer selected from 2 to 4;
   c) at least one diol of general formula C

      R³(OH)₂ (C)
   wherein R³ is selected from linear or branched, substituted or unsubstituted C₂-C₂₀ alkyl group,
with a proviso that R¹ is not -(CH₂)₄-,
wherein
the coating composition is characterized by a shore A hardness in the range from 75.0 to 100.0 according to DIN ISO 7619, elongation at break in the range from 500 to 800 according to DIN ISO 7619, tensile strength in the range from 30.0 to 60.0 MPa according to ASTM D412 or DIN 53504-S2, melt flow resistance in the range from 50.0 to 100.0 g/10 min according to ASTM D1238 or DIN EN ISO 1133, abrasion index in the range from 5.0 mm³ to 60.0 mm³ according to DIN ISO 4649.

In still another aspect of the presently claimed invention, there is provided a method of forming a thermoplastic polyurethane coating composition, the method comprising the steps of:
i) mixing the at least one polyol, the at least one chain extender and optionally at least one catalyst,
ii) adding the mixture obtained in step (i) to at least one polyisocyanate and heating the resultant mixture at a temperature ranging from 30 to 120° C to obtain polyurethane.

The method of the presently claimed invention provides a coated substrate which keeps check on the amounts of leachates leached out of the coating composition. Particularly, the amounts of leachates leached out of the thermoplastic polyurethane coating composition of the presently claimed invention is with within the permissible limit.

Further, the thermoplastic polyurethane coating composition of the presently claimed invention have acceptable properties, particularly those of tensile strength, elongation at break, melt flow rate, shore hardness and elongation at break.

The presently claimed invention offers one or more of the following advantages:
1. The amounts of the leachates leached out of the coated substrates are within the permissible levels. More specifically, below the permissible limit of below 100.0 µg/L.
2. The amounts of 2,4,7,9-Tetramethyldec-5-yn-4,7-diol (TMDD) leached out in water, when the contact with the coated surface of the substrates is well within the permissible limit of 20.0 µg/L.
3. The amounts of 7,9-Di-tert-butyl-1-oxaspiro(4,5)deca-6,9-diene-2,8-dione leached out in water, when the contact with the coated surface of the substrates is well within the permissible limit.

### Embodiments:

In the following, there is provided a list of embodiments to further illustrate the present disclosure without intending to limit the disclosure to the specific embodiments listed below.
1. A method for coating inner surface of a substrate with at least one thermoplastic polyurethane coating composition comprising a polyurethane and at least one wax, wherein the polyurethane is obtainable by a process comprising reacting
   a) at least one polyether polyol of general formula A,

      H(OR¹)ₘ(OH)ₙ, (A)

      wherein R¹ is selected from linear or branched, substituted or unsubstituted, C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group,
      m is an integer from 2 to 8, and
      n is an integer from 2 to 5;
   b) at least one polyisocyanate of general formula B

      R²(NCO)ₚ (B)

      wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, and
      p is an integer from 2 to 4;
   c) at least one diol of general formula C

      R³(OH)₂ (C)

      wherein R³ is selected from linear or branched, substituted or unsubstituted C₂-C₂₀ alkyl group, substituted or unsubstituted C₃-C₂₀ cycloalkyl group,
   with a proviso that R¹ is not -(CH₂)₄-.
2. The method according to embodiment 1, wherein the at least one polyether polyol is selected from polyethylene glycol, polypropylene glycol, polyisobutylene glycol, or a mixture thereof.
3. The method according to any one of embodiments 1 or 2, wherein the at least one polyisocyanate is selected from hexamethylene-1,6-diisocyanate; 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2-xylylene diisocyanate, 1,3- xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1, 3-diisocyanate, 1,2-cyclohexane diisocyanate, 1,3-cyclohexane diisocyanate, 1,4-cyclohexane diisocyanate, 2,4- methylcyclohexane diisocyanate, 2,6-methylcyclohexane diisocyanate, bis(isocyanatomethyl)-cyclohexane diisocyanate, 2,4'-dicyclohexyldiisocyanate, bis(isocyanatomethyl)-cyclohexane diisocyanate, isophorone diisocyanate or a mixture thereof.
4. The method according to any of embodiments 1 to 3, wherein the at least one polyisocyanate has an NCO content in the range from 2.0% to 33.5% by weight based on the total weight of the polyisocyanate.
5. The method according to any of embodiments 1 to 4, wherein the at least one diol of general formula (C) is selected from ethylene glycol, propane-1,3-diol, butane-1,4-diol, hexane-1,6-diol, cyclohexane-1,4-dimethanol or a mixture thereof.
6. The method according to any of embodiments 1 to 5, wherein the amount of the at least one diol is 5 wt% to 10 wt% based on total weight of the polyurethane.
7. The method according to any of embodiments 1 to 6, wherein the coating composition further comprises at least one hydrophobing agent of general formula R⁴-OH, wherein R⁴ is selected from C₆-C₂₀ alkyl group.
8. The method according to embodiment 7, wherein the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol or 1-eicosanol.
9. The method according to any one of embodiments 7 or 8, wherein the amount of the at least one hydrophobing agent is 0.05 wt% to 2.5 wt.% based on total weight of the polyurethane.
10. The method according to any of embodiments 1 to 9, wherein the at least one wax is selected from montanic acid ester, ethylene bis stearamide, fatty acid ester, fatty acid amides or a mixture thereof.
11. The method according to any of embodiments 1 to 10, wherein the shore A hardness of the at least one thermoplastic polyurethane coating composition is in the range from 75.0 to 100.0 according to DIN ISO 7619.
12. The method according to any of embodiments 1 to 11, wherein the elongation at break of the at least one thermoplastic polyurethane coating composition is in the range from 500 to 800 determined according to ASTM D412 or DIN 53504-S2.
13. The method according to any of embodiments 1 to 12, wherein the tensile strength of the at least one thermoplastic polyurethane coating composition is in the range from 30.0 to 60.0 MPa according to ASTM D412 or DIN 53504-S2.
14. The method according to any of embodiments 1 to 13, wherein the melt flow resistance of the at least one thermoplastic polyurethane coating composition is in the range from 50.0 to 100.0 g/10 min determined according to ASTM D1238 or DIN EN ISO 1133.
15. The method according to any of embodiments 1 to 14, wherein the abrasion index of the at least one thermoplastic polyurethane coating composition is in the range from 5.0 to 60.0 mm³ determined according to DIN ISO 4649.
16. The method according to any of embodiments 1 to 15, wherein the at least one thermoplastic polyurethane coating composition passes migration test method BS EN 12873-2:2005 for the content of cyclic oligomeric ethers.
17. The method according to any of embodiments 1 to 16, wherein the at least one thermoplastic polyurethane coating composition passes migration test according to method BS EN 12873-2:2005 for the content of 2,4,7,9-Tetramethyl-5-decyne-4,7-diol (TMDD).
18. The method according to any of embodiments 1 to 17, wherein the at least one thermoplastic polyurethane coating composition passes migration test according to method BS EN 12873-2:2005 for the content of 7,9-Di-tert-butyl-1-oxaspiro(4,5)deca-6,9-diene-2,8-dione (oxaspiro).
19. The method according to any of embodiments 1 to 18, wherein the substrate is a hollow substrate.
20. The method according to any of embodiments 1 to 19, wherein the substrate is selected from pipeline, containers, containment vessels or tanks.
21. The method according to any of embodiments 1 to 20, wherein the substrate is a pipeline for transport of drinking water.
22. The method according to embodiment 21, wherein the thickness of the coating of the at least one thermoplastic polyurethane coating composition coated on the inner surface of the pipeline for transport of drinking water is in the range of 0.1 to 10.0 mm.
23. The method according to any of embodiments 1 to 22, wherein the substrate is a container having inner surface coated with the thermoplastic polyurethane coating composition and the at least one coated inner surface is in direct contact with water.
24. A coated substrate having inner surface coated with at least one thermoplastic polyurethane coating composition comprising a polyurethane and at least one wax, wherein the polyurethane is obtainable by a process comprising reacting
   a) at least one polyether polyol of general formula A,

      H(OR¹)ₘ(OH)ₙ, (A)

      wherein R¹ is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
      m is an integer selected from 2 to 8, and
      n is an integer selected from 2 to 5;
   b) at least one polyisocyanate of general formula B

      R²(NCO)ₚ (B)

      wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
      p is an integer selected from 2 to 4;
      c) at least one diol of general formula C

         R³(OH)₂ (C)
      wherein R³ is selected from linear or branched, substituted or unsubstituted C₂-C₂₀ alkyl group, substituted or unsubstituted C₃-C₂₀ cycloalkyl group,
   with a proviso that R¹ is not -(CH₂)₄-.
25. The coated substrate according to embodiment 24, wherein the at least one polyether polyol is selected from polyethylene glycol, polypropylene glycol, polyisobutylene glycol, or a mixture thereof.
26. The coated substrate according to embodiment 24 or 25, wherein the at least one polyisocyanate is selected from hexamethylene-1,6-diisocyanate, 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2-xylylene diisocyanate, 1,3- xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1,3-diisocyanate, 1,2-cyclohexane diisocyanate, 1,3-cyclohexane diisocyanate, 1,4-cyclohexane diisocyanate, 2,4- methylcyclohexane diisocyanate, 2,6-methylcyclohexane diisocyanate, bis(isocyanatomethyl)-cyclohexane diisocyanate, 2,4'-dicyclohexyldiisocyanate, bis(isocyanatomethyl)-cyclohexane diisocyanate, isophorone diisocyanate, or a mixture thereof.
27. The coated substrate according to any of embodiments 24 to 26, wherein the at least one polyisocyanate has an NCO content in the range from 2.0% to 33.5% by weight based on the total weight of the polyisocyanate.
28. The coated substrate according to any of embodiments 24 to 27, wherein the at least one diol of general formula (C) is selected from ethylene glycol, propane-1,3-diol, butane-1,4-diol, hexane-1,6-diol, cyclohexane-1,4-dimethanol or a mixture thereof.
29. The coated substrate according to any of embodiments 24 to 28, wherein the amount of the diol is 5.0 wt% to 10.0 wt% based on total weight of the polyurethane.
30. The coated substrate according to any of embodiments 24 to 29, wherein the coating composition further comprises at least one hydrophobing of general formula R⁴-OH, wherein R⁴ is selected from C₆-C₂₀alkyl group.
31. The coated substrate according to embodiment 30, wherein the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol or 1-eicosanol.
32. The coated substrate according to embodiment 30 or 31, wherein the amount of the at least one hydrophobing agent is 0.05 wt% to 2.5 wt% based on total weight of the polyurethane.
33. The coated substrate according to any of embodiments 24 to 32, wherein the at least one wax is selected from montanic acid ester, ethylene bis stearamide, fatty acid ester, fatty acid amides or a mixture thereof.
34. The coated substrate according to any of embodiments 24 to 33, wherein the shore A hardness of the at least one thermoplastic polyurethane coating composition is in the range from 75.0 to 100.0 according to DIN ISO 7619.
35. The coated substrate according to any of embodiments 24 to 34, wherein the elongation at break of the at least one thermoplastic polyurethane coating composition is in the range from 500 to 800 determined according to ASTM D412 or DIN 53504-S2.
36. The coated substrate according to any of embodiments 24 to 35, wherein the tensile strength of the at least one thermoplastic polyurethane coating composition is in the range from 30.0 to 60.0 MPa according to ASTM D412 or DIN 53504-S2.
37. The coated substrate according to any of embodiments 24 to 36, wherein the melt flow resistance of the at least one thermoplastic polyurethane coating composition is in the range from 50.0 to 100.0 g/10 min determined according to ASTM D1238 or DIN EN ISO 1133.
38. The coated substrate according to any of embodiments 24 to 37, wherein the abrasion index of the at least one thermoplastic polyurethane coating composition is in the range from 5.0 to 60.0 mm³ determined according to DIN ISO 4649.
39. The coated substrate according to any of embodiments 24 to 38, wherein the at least one thermoplastic polyurethane coating composition passes migration test according to method BS EN 12873-2:2005 for the content of cyclic oligomeric ethers.
40. The coated substrate according to any of embodiments 24 to 39, wherein the at least one thermoplastic polyurethane coating composition passes migration test according to method BS EN 12873-2:2005 for the content of 2,4,7,9-Tetramethyl-5-decyne-4,7-diol (TMDD).
41. The coated substrate according to any of embodiments 24 to 40, wherein the at least one thermoplastic polyurethane coating composition passes migration test according to method BS EN 12873-2:2005 for the content of 7,9-Di-tert-butyl-1-oxaspiro(4,5)deca-6,9diene-2,8-dione (oxaspiro).
42. The coated substrate according to any of embodiments 26 to 45, wherein the substrate is a hollow substrate.
43. The coated substrate according to any of embodiments 24 to 42, wherein the substrate is selected from pipeline, containers, containment vessels or tanks.
44. The coated substrate according to any of embodiments 24 to 42, wherein the hollow substrate is a pipeline for transport of drinking water.
45. The coated substrate according to embodiment 44, wherein the thickness of the coating of the at least one thermoplastic polyurethane coating composition coated on the inner surface of the pipeline for transport of drinking water is in the range of 0.1 to 10.0 mm.
46. Use of at least one thermoplastic polyurethane coating composition for coating inner surface of a substrate, wherein the thermoplastic polyurethane coating composition is obtainable by process comprising reacting
   a) at least one polyether polyol of general formula A,

      H(OR¹)ₘ(OH)ₙ, (A)

      wherein R¹ is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
      m is an integer selected from 2 to 8, and
      n is an integer selected from 2 to 5;
   b) at least one polyisocyanate of general formula B

      R²(NCO)ₚ (B)

      wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
      p is an integer selected from 2 to 4;
      c) at least one diol of general formula C

         R³(OH)₂ (C)
      wherein R³ is selected from linear or branched, substituted or unsubstituted C₂-C₂₀ alkyl group, substituted or unsubstituted C₃-C₂₀ cycloalkyl group,
   with a proviso that R¹ is not -(CH₂)₄-.
47. The use according to embodiment 46, wherein the at least one polyether polyol is selected from polyethylene glycol, polypropylene glycol, polyisobutylene glycol, or a mixture thereof.
48. The use according to embodiment 46 or 47, wherein the at least one polyisocyanate is selected from hexamethylene-1,6-diisocyanate; 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2- xylylene diisocyanate, 1,3- xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1, 3-diisocyanate, 1,2-cyclohexane diisocyanate, 1,3-cyclohexane diisocyanate, 1,4-cyclohexane diisocyanate, 2,4- methylcyclohexane diisocyanate, 2,6-methylcyclohexane diisocyanate, bis(isocyanatomethyl)-cyclohexane diisocyanate, 2,4'-dicyclohexyldiisocyanate, bis(isocyanatomethyl)-cyclohexane diisocyanate, isophorone diisocyanate or a mixture thereof.
49. The use according to any of embodiments 46 to 48, wherein the at least one polyisocyanate has an NCO content in the range from 2.0% to 33.5% by weight based on the total weight of the polyisocyanate.
50. The use according to any of embodiments 46 to 49, wherein the at least one diol of general formula (C) is selected from ethylene glycol, propane-1,3-diol, butane-1,4-diol, hexane-1,6-diol, cyclohexane-1,4-dimethanol or a mixture thereof.
51. The use according to any of embodiments 46 to 50, wherein the amount of the at least one diol is 5 wt% to 10 wt% based on total weight of the polyurethane.
52. The use according to any of embodiments 46 to 51, wherein the coating composition further comprises at least one hydrophobing agent of general formula R⁴-OH, wherein R⁴ is selected from C₆-C₂₀ alkyl group.
53. The use according to embodiment 52, wherein the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol or 1-eicosanol.
54. The use according to any one of embodiments 52 or 53, wherein the amount of the at least one hydrophobing agent is 0.05 wt% to 2.5 wt.% based on total weight of the polyurethane.
55. The use according to any of embodiments 46 to 54, wherein the at least one wax is selected from montanic acid ester, ethylene bis stearamide, fatty acid ester, fatty acid amides or a mixture thereof.
56. The use according to any of embodiments 46 to 55, wherein the shore A hardness of the at least one thermoplastic polyurethane coating composition is in the range from 75.0 to 100.0 according to DIN ISO 7619.
57. The use according to any of embodiments 46 to 56, wherein the elongation at break of the at least one thermoplastic polyurethane coating composition is in the range from 500 to 800 determined according to ASTM D412 or DIN 53504-S2.
58. The use according to any of embodiments 46 to 57, wherein the tensile strength of the at least one thermoplastic polyurethane coating composition is in the range from 30.0 to 60.0 MPa according to ASTM D412 or DIN 53504-S2.
58. The use according to any of embodiments 46 to 58, wherein the melt flow resistance of the at least one thermoplastic polyurethane coating composition is in the range from 50.0 to 100.0 g/10 min determined according to ASTM D1238 or DIN EN ISO 1133.
59. The use according to any of embodiments 46 to 58, wherein the abrasion index of the at least one thermoplastic polyurethane coating composition is in the range from 5.0 to 60.0 mm³ determined according to DIN ISO 4649.
60. The use according to any of embodiments 46 to 59, wherein the at least one thermoplastic polyurethane coating composition passes migration test method BS EN 12873-2:2005 for the content of cyclic oligomeric ethers.
61. The use according to any of embodiments 46 to 60, wherein the at least one thermoplastic polyurethane coating composition passes migration test according to method BS EN 12873-2:2005 for the content of 2,4,7,9-Tetramethyl-5-decyne-4,7-diol (TMDD).
62. The use according to any of embodiments 46 to 61, wherein the at least one thermoplastic polyurethane coating composition passes migration test according to method BS EN 12873-2:2005 for the content of 7,9-Di-tert-butyl-1-oxaspiro(4,5)deca-6,9-diene-2,8-dione (oxaspiro).
63. The use according to any of embodiments 46 to 62, wherein the substrate is a hollow substrate.
64. The use according to any of embodiments 46 to 63, wherein the substrate is selected from pipeline, containers, containment vessels or tanks.
65. The use according to any of embodiments 46 to 64, wherein the substrate is a pipeline for transport of drinking water.
66. The use according to embodiment 65, wherein the thickness of the coating of the at least one thermoplastic polyurethane coating composition coated on the inner surface of the pipeline for transport of drinking water is in the range of 0.1 to 10.0 mm.
67. The use according to any of embodiments 46 to 66, wherein the substrate is a container having inner surface coated with the thermoplastic polyurethane coating composition and the at least one coated inner surface is in direct contact with water.
68. A thermoplastic polyurethane coating composition comprising a polyurethane and at least one wax, wherein the polyurethane is obtainable by a process comprising reacting
   a) at least one polyether polyol of general formula A,

      H(OR¹)ₘ(OH)ₙ, (A)

      wherein R¹ is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
      m is an integer selected from 2 to 8, and
      n is an integer selected from 2 to 5;
   b) at least one polyisocyanate of general formula B

      R²(NCO)ₚ (B)

      wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
      p is an integer selected from 2 to 4;
      c) at least one diol of general formula C

         R³(OH)₂ (C)
      wherein R³ is selected from linear or branched, substituted or unsubstituted C₂-C₂₀ alkyl group, substituted or unsubstituted C₃-C₂₀ cycloalkyl group,
   with a proviso that R¹ is not -(CH₂)₄-.
   wherein the coating composition is characterized by a shore A hardness in the range from 75.0 to 100.0 according to DIN ISO 7619, elongation at break in the range from 500 to 800 according to DIN ISO 7619, tensile strength in the range from 30.0 to 60.0 MPa according to ASTM D412 or DIN 53504-S2,+ melt flow resistance in the range from 50 to 90 g/10 min according to ASTM D1238 or DIN EN ISO 1133, abrasion index in the range from 5.0 to 60.0 mm³ according to DIN ISO 4649.
69. A method of forming a thermoplastic polyurethane coating composition, the method comprising the steps of:
   ii) mixing the at least one polyol, the at least one chain extender and optionally at least one catalyst,
   iii) adding the mixture obtained in step (i) to at least one polyisocyanate and heating the resultant mixture at a temperature ranging from 30 to 120° C to obtain polyurethane.

### EXAMPLES

The presently claimed invention is illustrated in detail by non-restrictive working examples which follow. More particularly, the test methods specified hereinafter are part of the general disclosure of the application and are not restricted to the specific working examples.

### Materials and method

| | |
|---|---|
| Polyglycol | polyethylene glycol |
| Monomeric MDI | 4,4'-diphenylmethane diisocyanate (MDI) |
| Wax | Ester of montanic acids with multifunctional alcohols. The montanic acids contained in raw montan wax are straight chain, unbranched monocarboxylic acids with a chain length in the range of C₂₈-C₃₂ |
| Monol | long chain alcohol |
| Alternative liner | A comparable commercial polyurethane liner |
| TPU 1 | An alternative polyether TPU used in medical film applications |
| TPU 2 | A comparable polyether TPU used in film and sheet applications |
| TPU 3 | A comparable polyether TPU |

### Standard methods

| | |
|---|---|
| Elongation at break | ASTM D412 or DIN 53504-S2 |
| tensile strength | ASTM D412 or DIN 53504-S2 |
| melt flow resistance | ASTM D1238 or DIN EN ISO 1133 |
| abrasion index | DIN ISO 4649 |
| Migration test for OCE's, TMDD, Oxaspiro | BS EN 12873-2:2005 |
| Hydrolysis resistance | 100% RH exposure at elevated temperature followed by ASTM D412 or DIN 53504-S2 |

### Example 1: Preparation of thermoplastic polyurethane coating composition (IE1)

Polyglycol was mixed with 1,4-butanediol, monol and wax to obtain a mixture. The mixture was added to MDI and the resultant mixture was heated at a temperature ranging from 30 to 120° C to obtain polyurethane. The polyurethane is extruded to obtain the beads and named IE1.

### Example 2: Preparation of thermoplastic polyurethane coating composition (IE2)

Polyglycol was mixed with 1,4-butanediol, and wax to obtain a mixture. The so obtained mixture was added to MDI and the resultant mixture was heated at a temperature ranging from 30 to 120° C to obtain polyurethane. The so obtained polyurethane is extruded to obtain the beads and named IE2.

Mechanical properties of the thermoplastic polyurethane coating compositions (IE1 and IE2) were determined, which are reported in Table 1 given below.

**Table 1: Mechanical properties of the thermoplastic polyurethane coating compositions (IE1 and IE2)**

| Material | MFR [g/10min] | Shore A | Tensile strength [MPa] | Elongation at break [%] | Abrasion index [ mm³] |
|---|---|---|---|---|---|
| IE1 | 70 | 93 | 33 | 630 | 26 |
| IE2 | 89 | 90 | 33 | 530 | 35 |
| TPU 3 | 30-60 | 90 | 31 | 395 | 25 |

As evident from Table 1, the coating compositions of the presently claimed invention have acceptable properties, particularly tensile strength, elongation at break, in comparison with the comparative samples based on commercially available TPU 3. Moreover, the thermoplastic polyurethane coating compositions of the presently claimed invention have improved melt flow rate, shore hardness and elongation at break. The results show that the thermoplastic polyurethane coating compositions of the presently claimed invention satisfy the requirements for using it as pipe liners.

### Migration studies

The migration studies were performed in accordance with the test conditions given in BS EN 12873-2:2005. The migration study in both non-chlorinated and chlorinated waters were investigated by exposing the surface coated with the thermoplastic polyurethane coating composition exposed in chlorinated or non-chlorinated water. The migration studies were carried out for three consecutive 72 hour migration period (T1, T2, T3). Each migration period represents 72 hours. After 72 hours, the migration water was decanted (T1) and replaced with fresh test water.

The migration extracts were directly analysed by liquid chromatography-mass spectrometry (LC-MS-MS) with positive electrospray ionization using multiple reaction monitoring. The study investigated the following leachates, oligomeric cyclic ethers and 2,4,7,9-Tetramethyl-5-decyne-4,7-diol (TMDD).

| Compound | Chemical Structure |
|---|---|
| OCE3 | 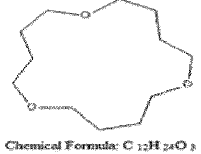 |
| OCE4 | 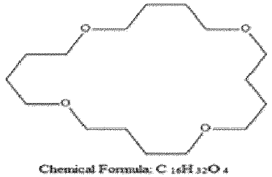 |
| OCE5 | 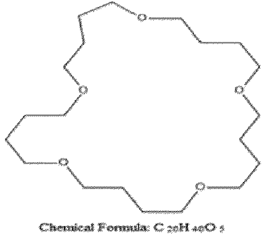 |
| OCE6 | 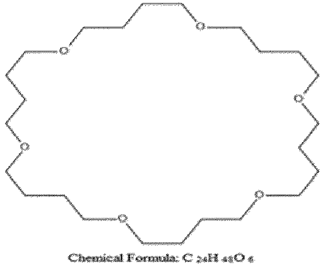 |
| 2,4,7,9-Tetramethyl-5-decyne-4,7-diol (TMDD) | 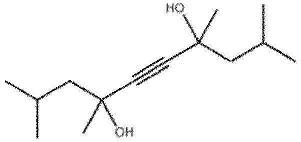 |

The results summary for migration of leachates for !E1, and comparative compositions, an alternative commercial liner and TPU1 are tabulated in Tables 2-4 below.

**Table 2: Migration study of leachates for IE2 determined according to standard method BS EN 12873-2:2005**

| | OCE 3 | | OCE 4 | | OCE 5 | | OCE 6 | | Total OCEs | | TMDD | | Oxaspiro | |
|---|---|---|---|---|---|---|---|---|---|---|---|---|---|---|
| Non-Chlorinated Water | Migration Rate (M^{T}ₙ) µg dm ²d⁻¹ | Tap Concentration (Cₜₐₚ) µg/L | Migration Rate (M^{T}ₙ ) µg dm ²d⁻¹ | Tap Concentration (Cₜₐₚ) µg/L | Migration Rate (M^{T}ₙ ) µg dm ²d⁻¹ | Tap Concentration (Cₜₐₚ) µg/L | Migration Rate (M^{T}ₙ µg dm ²d⁻¹ | Tap Concentration (Cₜₐₚ) µg/L | Migration Rate (M^{T}ₙ > µg dm ²d⁻¹ | Tap Concentration (Cₜₐₚ) µg/L | Migration Rate (M^{T}ₙ ) µg dm ²d⁻¹ | Tap Concentration (Cₜₐₚ) µg/L | Migration Rate (M^{T}ₙ) µg dm⁻²d⁻¹ | Tap Concentration (Cₜₐₚ) µg/L |
| T1 | 0.01 | 0.26 | 0.20 | 4.04 | 0.54 | 10.84 | 0.31 | 6.30 | 1.07 | 21.43 | -- | -- | <0.67 | <13 |
| T2 | 0.03 | 0.62 | 0.27 | 5.34 | 0.45 | 9.01 | 0.34 | 6.75 | 1.09 | 21.72 | <0.2 | <3 | <0.67 | <13 |
| T3 | 0.02 | 0.33 | 0.15 | 3.10 | 0.30 | 5.96 | 0.25 | 5.08 | 0.72 | 14.48 | <0.2 | <3 | <0.67 | <13 |
| | | | | | | | | | | | | | | |

| Chlorinated Water | | | | | | | | | | | | | | |
|---|---|---|---|---|---|---|---|---|---|---|---|---|---|---|
| T1 | 0.02 | 0.33 | 0.25 | 4.95 | 0.51 | 10.28 | 0.27 | 5.41 | 1.05 | 20.97 | -- | -- | <0.67 | <13 |
| T2 | 0.03 | 0.65 | 0.28 | 5.53 | 0.48 | 9.67 | 0.35 | 7.03 | 1.14 | 22.88 | <0.2 | <3 | <0.67 | <13 |
| T3 | 0.02 | 0.35 | 0.15 | 3.09 | 0.29 | 5.79 | 0.25 | 5.07 | 0.72 | 14.31 | <0.2 | <3 | <0.67 | <13 |

**Table 3: Migration study of leachates for Alternative liner determined according to standard method BS EN 12873-2:2005**

| | OCE 3 | | OCE 4 | | OCE5 | | OCE 6 | | Total OCEs | |
|---|---|---|---|---|---|---|---|---|---|---|
| Non-Chlorinated Water | Migrati on Rate (M^{T}ₙ) µg dm^{- 2}d⁻¹ | Tap Concentra tion (Cₜₐₚ) µg/L | Migrati on Rate (M^{T}ₙ) µg dm^{- 2}d⁻¹ | Tap Concentra tion (Cₜₐₚ) µg/L | Migrati on Rate (M^{T}ₙ) µg dm^{- 2}d⁻¹ | Tap Concentra tion (Cₜₐₚ) µg/L | Migrati on Rate (M^{T}ₙ) µg dm^{- 2}d⁻¹ | Tap Concentra tion (Cₜₐₚ) µg/L | Migrati on Rate (M^{T}ₙ) µg dm^{- 2}d⁻¹ | Tap Concentra tion (Cₜₐₚ) µg/L |
| T1 | 0.07 | 1.56 | 4.12 | 82.50 | 9.49 | 189.50 | 16.25 | 325 | 29.93 | 598.56 |
| T2 | 0.05 | 0.97 | 2.75 | 55.00 | 7.49 | 149.50 | 14.40 | 288 | 24.69 | 493.47 |
| T3 | 0.02 | 1.07 | 2.26 | 45.00 | 6.93 | 139.00 | 13.20 | 264.00 | 22.41 | 449.07 |

| Chlorinated Water | | | | | | | | | | |
|---|---|---|---|---|---|---|---|---|---|---|
| T1 | 0.05 | 1.14 | 3.37 | 67.00 | 8.00 | 160.00 | 13.95 | 210.00 | 25.37 | 438.14 |
| T2 | 0.04 | 0.82 | 2.34 | 47 | 6.51 | 130.50 | 13.01 | 260.50 | 21.9 | 438.82 |
| T3 | 0.05 | 0.93 | 2.19 | 43.50 | 6.15 | 123.00 | 11.78 | 246.00 | 20.17 | 413.43 |

**Table 4: Migration study of leachates for TPU 1 determined according to standard method BS EN 12873-2:2005**

| | OCE 3 | | OCE 4 | | OCE 5 | | OCE 6 | | Total OCEs | | TMDD | |
|---|---|---|---|---|---|---|---|---|---|---|---|---|
| Non-Chlorinate d Water | Migra tion Rate (M^{T}ₙ) µg dm^{- 2}d⁻¹ | Tap Concent ration (Cₜₐₚ) µg/L | Migra tion Rate (M^{T}ₙ) µg dm^{- 2}d⁻¹ | Tap Concent ration (Cₜₐₚ) µg/L | Migra tion Rate (M^{T}ₙ) µg dm^{- 2}d⁻¹ | Tap Concent ration (Cₜₐₚ) µg/L | Migra tion Rate (M^{T}ₙ) µg dm^{- 2}d⁻¹ | Tap Concent ration (Cₜₐₚ) µg/L | Migra tion Rate (M^{T}ₙ) µg dm^{- 2}d⁻¹ | Tap Concent ration (cₜₐₚ) µg/L | Migra tion Rate (M^{T}ₙ) µg dm^{- 2}d⁻¹ | Tap Concent ration (Cₜₐₚ) µg/L |
| T1 | 1.00 | 20.11 | 49 | 987.00 | 74.50 | 1493.00 | 82 | 1638.5 | 206.5 0 | 4138.61 | <0.20 | <3.0 |
| T2 | 0.37 | 7.34 | 31 | 620.00 | 66.00 | 1317.0 | 76.50 | 1531 | 173.8 7 | 3475.34 | <0.20 | <3.0 |
| T3 | 0.17 | 3.31 | 24.50 | 490.50 | 63.50 | 1268.0 | 74.0 | 1486 | 162.1 7 | 3247.81 | <0.20 | <3.0 |

| Chlorinate d Water | | | | | | | | | | | | |
|---|---|---|---|---|---|---|---|---|---|---|---|---|
| T1 | 1.00 | 20.00 | 48.00 | 958.50 | 77.50 | 1553.50 | 77.0 | 1542.5 | 203.5 0 | 4074.50 | <0.20 | <3.0 |
| T2 | 0.36 | 7.20 | 29.50 | 588.50 | 67.50 | 1346.50 | 76.50 | 1532.50 | 173.8 6 | 3474.7 | <0.20 | <3.0 |
| T3 | 0.15 | 3.03 | 24.50 | 403.50 | 52.50 | 1050.50 | 52.00 | 1041.50 | 129.1 5 | 2498.53 | <0.20 | <3.0 |

As evident from Tables 2 to 4, the amounts of leachates migrated in water after contacting with the thermoplastic polyurethane coating composition of the examples IE1 is substantially low as compared to the comparative compositions.

Specifically, it is notable that the amounts of the leachates from the coating composition of the examples IE1 and IE2 are within the permissible levels. More specifically, the permissible limit for oligomeric cyclic ethers in potable water is below 100 µg/L. The amounts of the oligomeric cyclic ethers for IE1 does not exceed 21.73 µg/L. Similarly, the leaching of 2,4,7,9-Tetramethyldec-5-yn-4,7-diol (TMDD) and Oxaspiro in potable water when in contact with the thermoplastic polyurethane coating composition of the presently claimed invention is well within the permissible limit.

## Claims

1. A method for coating inner surface of a substrate with at least one thermoplastic polyurethane coating composition comprising a polyurethane and at least one wax, wherein the polyurethane is obtainable by a process comprising reacting
a) at least one polyether polyol of general formula A,
H(OR¹)ₘ(OH)ₙ, (A)
wherein R¹ is selected from linear or branched, substituted or unsubstituted, C₂-C₂₀ alkyl group, substituted or unsubstituted C₆-C₂₀ aryl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group,
m is an integer from 2 to 8, and
n is an integer from 2 to 5;
b) at least one polyisocyanate of general formula B
R²(NCO)ₚ (B)
wherein R² is selected from linear or branched, substituted or unsubstituted C₂-C₂₀ alkyl group, substituted or unsubstituted C₆-C₂₀ aryl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, and
p is an integer from 2 to 4;
c) at least one diol of general formula C
R³(OH)₂ (C)
wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

2. The method according to claim 1, wherein the at least one polyether polyol is selected from polyethylene glycol, polypropylene glycol, polyisobutylene glycol, or a mixture thereof.

3. The method according to any of claim 1 or 2, wherein the at least one polyisocyanate is selected from hexamethylene-1,6-diisocyanate, 2,2,4-trimethylhexamethylene diisocyanate, 4,4'-dicychohexylemethane diisocyanate, 2,2-diphenylmethane diisocyanate, 4,4-diphenylmethane diisocyanate, 2,4-tolylene diisocyanate, 2,6-tolylene diisocyanate, 1,2-phenylene diisocyanate, 1,3-phenylene diisocyanate, 1,4-phenylene diisocyanate, triphenyl methane-4,4',4"-triisocyanate, naphthylene-1,5-diisocyanate, polyphenyl polymethylene polyisocyanate, 1,2-xylylene diisocyanate, 1,3-xylylene diisocyanate, 1,4-xylylene diisocyanate, m-tetramethylxylyene diisocyanate (TMXDI), tetramethylene 1,4-diisocyanate, pentamethylene 1,5-diisocyanate, hexamethylene 1,6-diisocyanate, decamethylene diisocyanate, 1,12-dodecane diisocyanate, 2-methyl-1,5-pentamethylene diisocyanate, cyclobutane-1, 3-diisocyanate, 1,2-cyclohexane diisocyanate, 1,3-cyclohexane diisocyanate, 1,4-cyclohexane diisocyanate, 2,4-methylcyclohexane diisocyanate, 2,6-methylcyclohexane diisocyanate, 2,4'-dicyclohexyldiisocyanate, bis(isocyanatomethyl)-cyclohexane diisocyanate, isophorone diisocyanate or a mixture thereof.

4. The method according to any of claims 1 to 3, wherein the at least one polyisocyanate has an NCO content in the range from 2.0 wt% to 33.5 wt% based on the total weight of the polyisocyanate.

5. The method according to any of claims 1 to 4, wherein the at least one diol of general formula (C) is selected from ethylene glycol, propane-1,3-diol, butane-1,4-diol, hexane-1,6-diol, cyclohexane-1,4-dimethanol or a mixture thereof.

6. The method according to any of claims 1 to 5, wherein the amount of the at least one diol is 5.0 wt% to 10.0 wt% based on total weight of the polyurethane.

7. The method according to any of claims 1 to 6, wherein the coating composition further comprises at least one hydrophobing agent of Formula R⁴-OH, wherein R⁴ is selected from C₆-C₂₀ alkyl groups.

8. The method according to claim 7, wherein the at least one hydrophobing agent is selected from 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol, 1-eicosanol or combinations thereof.

9. The method according to claim 7 or 8, wherein the amount of the at least one hydrophobing agent is 0.05 wt% to 2.5 wt.% based on total weight of the polyurethane.

10. The method according to any of claims 1 to 9, wherein the at least one wax is selected from montanic acid ester, ethylene bis stearamide, fatty acid ester, fatty acid amides or a mixture thereof.

11. The method according to any of claims 1 to 10, wherein the shore A hardness of the at least one thermoplastic polyurethane coating composition is in the range from 75.0 to 100.0 according to DIN ISO 7619, the elongation at break of the at least one thermoplastic polyurethane coating composition is in the range from 500 to 800 determined according to ASTM D412 or DIN 53504-S2, the tensile strength of the at least one thermoplastic polyurethane coating composition is in the range from 30.0 to 60.0 MPa according to ASTM D412 or DIN 53504-S2, the melt flow resistance of the at least one thermoplastic polyurethane coating composition is in the range from 50.0 to 100.0 g/10 min determined according to ASTM D1238 or DIN EN ISO 1133, and the abrasion index of the at least one thermoplastic polyurethane coating composition is in the range from 5.0 to 60.0 mm³ determined according to DIN ISO 4649.

12. The method according to any of claims 1 to 11, wherein the at least one thermoplastic polyurethane coating composition passes migration test method BS EN 12873-2:2005 for the content of cyclic oligomeric ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro).

13. The method according to any of claims 1 to 12, wherein the substrate is a hollow substrate selected from pipeline, containers, containment vessels or tanks.

14. The method according to any of claims 1 to 13 wherein the substrate is a pipeline for transport of drinking water.

15. A coated substrate having inner surface coated with at least one thermoplastic polyurethane coating composition comprising a polyurethane and at least one wax, wherein the polyurethane is obtainable by a process comprising reacting
a) at least one polyether polyol of general formula A,
H(OR¹)ₘ(OH)ₙ, (A)
wherein R¹ is selected from linear or branched, substituted or unsubstituted C₂-C₂₀ alkyl group, substituted or unsubstituted C₂-C₂₀ aryl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
m is an integer selected from 2 to 8, and
n is an integer selected from 2 to 5;
b) at least one polyisocyanate of general formula B
R²(NCO)ₚ (B)
wherein R² is selected from linear or branched, substituted or unsubstituted C₂-C₂₀ alkyl group, substituted or unsubstituted C₂-C₂₀ aryl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group; and
p is an integer selected from 2 to 4;
c) at least one diol of general formula C
R³(OH)₂ (C)
wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

16. The coated substrate according to claim 15, wherein the at least one thermoplastic polyurethane coating composition passes migration test according to method BS EN 12873-2:2005 for the content of cyclic oligomeric ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro).

17. The coated substrate according to claim 15 or 16, wherein the substrate is a hollow substrate; wherein the hollow substrate is a pipeline for transport of drinking water.

18. Use of at least one thermoplastic polyurethane coating composition for coating inner surface of a substrate, wherein the thermoplastic polyurethane coating composition comprising a polyurethane and at least one wax, wherein the polyurethane is obtainable by process comprising reacting
a) at least one polyether polyol of general formula A,
H(OR¹)ₘ(OH)ₙ, (A)
wherein R¹ is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, or substituted or unsubstituted C₃-C₂₀ cycloalkyl group,
m is an integer selected from 2 to 8, and
n is an integer selected from 2 to 5;
b) at least one polyisocyanate of general formula B
R²(NCO)ₚ (B)
wherein R² is selected from linear or branched, substituted or unsubstituted C₂-C₂₀ alkyl group, linear or branched, substituted or unsubstituted C₇-C₂₀ arylalkyl group, linear or branched, substituted or unsubstituted C₂-C₂₀ alkylene group, linear or branched, substituted or unsubstituted C₃-C₂₀ cycloalkyl group, substituted or unsubstituted C₆-C₂₀ aryl group; and
p is an integer selected from 2 to 4;
c) at least one diol of general formula C
R³(OH)₂ (C)
wherein R³ is selected from linear or branched, substituted or unsubstituted C₂-C₂₀ alkyl group, substituted or unsubstituted C₃-C₂₀ cycloalkyl group,
with a proviso that R¹ is not -(CH₂)₄-.

19. The use according to claim 18, wherein the substrate is a hollow substrate selected from pipeline, containers, containment vessels or tanks.

20. The use according to claim 18 or 19, wherein the substrate is a pipeline for transport of drinking water.

21. The use substrate according to any of claims 18 to 20, wherein the thickness of the coating of the at least one thermoplastic polyurethane coating composition coated on the inner surface of the pipeline for transport of drinking water is in the range of 0.1 to 10.0 mm.

22. The use according to any of claims 18 to 21, wherein the at least one thermoplastic polyurethane coating composition passes migration test method BS EN 12873-2:2005 for the content of cyclic oligomeric ethers, 2,4,7,9-Tetramethyl-5-decyne-4,7-diol (TMDD) and 7,9-Di-tert-butyl-1-oxaspiro(4,5)deca-6,9-diene-2,8-dione (oxaspiro).
